# EUROPÄISCHE PATENTANMELDUNG

(11) **EP 4 385 962 A1**
(43) Veröffentlichungstag der Anmeldung: **19.06.2024**
(21) Anmeldenummer: 22213151.8
(22) Anmeldetag: 13.12.2022
(51) Int. Cl.: C04B 26/04, C04B 26/06, C04B 111/80

(54) **PASTÖSE BUNTSTEINPUTZMASSE SOWIE EIN- ODER MEHRLAGIGE BUNTSTEINPUTZSCHICHT, VERWENDUNG EINER ERFINDUNGSGEMÄSSEN PASTÖSEN BUNTSTEINPUTZMASSE**

(71) Anmelder: STO SE & Co. KGaA, 79780 Stühlingen (DE)
(72) Erfinder: Hitzler, Martin, 78244 Gottmadingen (DE); Fraunhoffer, Dominik, 78166 Donaueschingen (DE); Sauter, Elisabeth, 78250 Tengen (DE)
(74) Vertreter: Gottschalk, Matthias

(57) **Zusammenfassung**

Die Erfindung betrifft eine pastöse Buntsteinputzmasse zur Ausbildung einer ein- oder mehrlagigen Buntsteinputzschicht, enthaltend
- mindestens ein Polymerbindemittel,
- körnige und/oder sandige Füllstoffe,
- Hydrophobierungsmittel,
- weitere Additive und
- Wasser,
wobei zumindest ein Teil der körnigen und/oder sandigen Füllstoffe eine Beschichtung mit NIR-reflektierenden Schwarzpigmenten und einen
- Hellbezugswert (HBW) < 14, vorzugsweise < 10, weiterhin vorzugsweise < 8, und
- Total Solar Reflectance (TSR)-Wert > 10, vorzugsweise > 12, weiterhin vorzugsweise > 15,
aufweist.

Ferner betrifft die Erfindung eine aus der pastösen Buntsteinputzmasse ausgebildete ein- oder mehrlagige Buntsteinputzschicht sowie die Verwendung der erfindungsgemäßen pastösen Buntsteinputzmasse zur Ausbildung einer ein- oder mehrlagigen Buntsteinputzschicht.

## Beschreibung

Die Erfindung betrifft eine pastöse Buntsteinputzmasse zur Ausbildung einer ein- oder mehrlagigen Buntsteinputzschicht. Darüber hinaus betrifft die Erfindung eine ein- oder mehrlagige Buntsteinputzschicht aus einer erfindungsgemäßen pastösen Buntsteinputzmasse sowie eine Verwendung einer erfindungsgemäßen pastösen Buntsteinputzmasse.

### Stand der Technik

Buntsteinputze finden sowohl im Außen- als auch im Innenbereich Anwendung. Im Außenbereich werden sie üblicherweise im Sockelbereich von Fassaden eingesetzt, um einen schmutzunempfindlichen und zugleich dekorativen unteren Abschluss zu schaffen. Im Innenbereich werden Buntsteinputze häufig zur dekorativen Gestaltung von Oberflächen an besonders exponierten Stellen, wie beispielsweise an Säulen, Pfeilern oder Wandvorsprüngen, eingesetzt.

Typisch für den Buntsteinputz ist der Vielfarben- bzw. "Multicolor"-Effekt, der durch farbige und/oder eingefärbte Füllstoffe, wie beispielsweise farbige Marmorkörnungen, eingefärbte Quarzkörner und/oder natürlichem Kies in unterschiedlichen Färbungen erzielt wird. Die Bindung der Füllstoffe erfolgt mit transparenten Bindemitteln, um die Farbwirkung nicht zu beeinträchtigen. Dabei kommen sowohl wässrige als auch lösungsmittelhaltige Bindemitteldispersionen zum Einsatz, wobei letztere den Vorteil haben, dass sie bei länger anhaltender Feuchtigkeitseinwirkung, beispielsweise bei Anwendung im Außenbereich, nicht die Tendenz zum "Weißanlaufen" haben (siehe: Fachlexikon für Putze & Beschichtungen, Fachgruppe Putz & Dekor im Verband der deutschen Lack- und Druckfarbenindustrie e. V., 4. Ausgabe 2019).

Der Effekt des Weißanlaufens tritt durch die direkte Einwirkung von Feuchtigkeit auf. Wasserempfindliche Additive, Reste von Filmbildehilfsmitteln und/oder hydrophile Bestandteile von Dispersionsbindemittel können dann zu einer Trübung bis zum milchig-weiß-Werden führen. Nach vollständiger Trocknung verschwindet dieser Effekt in der Regel wieder, so dass er reversibel ist. Mit zunehmendem Alter der Putzschicht nimmt zudem die Tendenz zum Weißanlaufen ab. Dennoch wird die zeitlich begrenzte, sichtbare Veränderung als äußerst störend empfunden.

Bei Anwendung von Buntsteinputzen im Außenbereich kann es darüber hinaus zu Farbveränderungen und/oder Farbverlusten aufgrund von Sonneneinstrahlung kommen. Der Putz verliert dann zunehmend an Ansehnlichkeit, wobei dieser Effekt nicht reversibel ist. Es wurde festgestellt, dass eine Ursache für die Farbveränderungen und/oder Farbverluste bei starker Sonneneinstrahlung eine thermisch induzierte Zerstörung der auf den Körnungen zur Einfärbung aufgebrachten Farbschichten ist. Denn eine zu hohe Temperaturbelastung kann zu einem Abplatzen der Farbschichten von den Kornoberflächen führen.

Die Sonneneinstrahlung führt darüber hinaus zu einem starken Aufheizen des Buntsteinputzes, wobei sich dieser umso stärker aufheizt, je dunkler die Farbgebung des Buntsteinputzes ist. In der Folge kann es zu thermisch bedingten Rissbildungen kommen, die insbesondere darauf zurückzuführen sind, dass sich der Putz stärker ausdehnt als die darunterliegende Schicht. Ist der Buntsteinputz auf einer Wärmedämmschicht aufgebracht, kann sich diese bei einer stark aufgeheizten Putzschicht irreversibel verformen, so dass es auch zu Schäden an darunterliegenden Schichten kommen kann.

All dies ist Grund dafür, dass die Anwendung von Buntsteinputzen sich bislang auf vergleichsweise kleine Flächen beschränkt. Dies gilt insbesondere bei Anwendungen im Außenbereich. Dennoch steigt allgemein das Interesse an Fassaden, die großflächig mit einem dunkel eingefärbten Buntsteinputz beschichtet sind.

Der Erfindung liegt daher die Aufgabe zugrunde, eine pastöse Buntsteinputzmasse zur Ausbildung einer ein- oder mehrlagigen Buntsteinputzschicht anzugeben, welche die vorstehend genannten Nachteile nicht oder zumindest in deutlich verringertem Maße aufweist.

Zur Lösung der Aufgabe wird die pastöse Buntsteinputzmasse mit den Merkmalen des Anspruchs 1 vorgeschlagen. Ferner werden eine ein- oder mehrlagige Buntsteinputzschicht aus einer erfindungsgemäßen pastösen Buntsteinputzmasse sowie eine Verwendung für eine erfindungsgemäße pastöse Buntsteinputzmasse angegeben.

### Offenbarung der Erfindung

Die vorgeschlagene pastöse Buntsteinputzmasse zur Ausbildung einer ein- oder mehrlagigen Buntsteinputzschicht enthält:
- mindestens ein Polymerbindemittel,
- körnige und/oder sandige Füllstoffe,
- Hydrophobierungsmittel,
- weitere Additive und
- Wasser.

Dabei weist zumindest ein Teil der körnigen und/oder sandigen Füllstoffe eine Beschichtung mit NIR-reflektierenden Schwarzpigmenten und einen
- Hellbezugswert (HBW) < 14, vorzugsweise < 10, weiterhin vorzugsweise < 8, und
- Total Solar Reflectance (TSR)-Wert > 10, vorzugsweise > 12, weiterhin vorzugsweise > 15,
auf.

Die vorgeschlagene pastöse Buntsteinputzmasse ermöglicht die Herstellung einer Buntsteinputzschicht, die eine dunkle Farbgebung aufweist, das heißt einen HBW < 20, vorzugsweise < 15 und weiterhin vorzugsweise < 12 aufweist. Darüber hinaus weist die Buntsteinputzschicht einen TSR-Wert > 10, vorzugsweise > 12 weiterhin vorzugsweise > 15 auf, was unüblich für eine dunkle Buntsteinputzschicht ist.

Der Hellbezugswert (HBW) ist ein Maß für die Helligkeit einer Oberfläche. Er stellt den Reflektionsgrad eines bestimmten Farbtons zwischen dem Schwarzpunkt (0%) und dem Weißpunkt (100%) dar. Der Hellbezugswert gibt dabei an, wie weit der betreffende Farbton vom Schwarz- bzw. Weißpunkt entfernt ist. So sagt beispielsweise ein Hellbezugswert von 85 für einen Farbton aus, dass dieser sehr hell ist. Umgekehrt ist ein Farbton mit einem Hellbezugswert von 15 sehr dunkel. Laut den "Technischen Richtlinien für die Planung und Verarbeitung von Wärmedämmverbundsystemen" (BFS-Merkblatt Nr. 21) sollten zur Vermeidung von Spannungsrissen infolge großer Temperaturdifferenzen nur Schlussbeschichtungen mit einem HBW ≥ 20 angewendet werden. Bei einem HBW < 20 empfiehlt sich eine objektbezogene Beratung und/oder der Einsatz spezieller Systeme (siehe DIN EN ISO 18451-1).

Die einschlägige Norm für den Hellbezugswert ist die DIN 5033-1:2009-05. Zur Bestimmung des Hellbezugswerts kann beispielsweise das Messgerät Data-Color 600 verwendet werden.

Der Total Solar Reflectance-Wert beschreibt das solare Reflexionsvermögen einer pigmentierten Oberfläche. Es handelt sich dabei um den Anteil der Strahlungsenergie der Sonne, der von einer Oberfläche zurückgestrahlt wird. Je höher dieser Wert ist, desto stärker wird die solare Strahlung reflektiert und umso geringer ist daher der Temperaturanstieg gegenüber der Umgebungstemperatur der auf einer Oberfläche nach Sonneneinstrahlung gemessen werden kann. Die Aufheizung ist reziprok abhängig vom TSR-Wert. Durch gezielte Auswahl von Pigmenten, die im Bereich des Nahen Infrarots (NIR) eine möglichst geringe Absorption zeigen, können bei sehr dunklen Farbtönen niedrigere Oberflächentemperaturen erzielt werden.

Der TSR-Wert korreliert nicht zwingend mit dem HBW, da dieser das Reflexionsverhalten einer Oberfläche gegenüber der gesamten solaren Strahlung nicht wiedergibt. Bei der Bestimmung des HBW wird nur die sichtbare elektromagnetische Strahlung (VIS), nicht aber das NIR berücksichtigt, das über 50% der eingestrahlten Sonnenenergie ausmacht.

Die totale solare Reflektion bzw. der TSR-Wert kann anhand der Norm ASTM G173-03 ermittelt werden. Zur Bestimmung des TSR-Werts kann ein UV-VIS-NIR Spektrophotometer vom Typ Cary 5000 (Firma Agilent Technologies) mit Ulbricht-Kugel (150 mm Integrationskugel) für Messungen mit diffuser Reflexion oder ein Spektrophotometer vom Typ Lambda 950 der Fa. Perkin Elmer mit entsprechender Ulbricht-Kugel verwendet werden.

Bekannte Füllstoffe, insbesondere in dunklen Farbtönen, haben einen niedrigen Hellbezugswert (HBW), aber auch einen niedrigen TSR-Wert. D.h. sie absorbieren das sichtbare Licht und Strahlung im nahen IR-Bereich (bis 3000 nm) weitgehend und wandeln die Energie in Wärme um. Durch Einfärben der Füllstoffe mit helleren Farbpigmenten kann die Absorption gemindert und die Reflektion verstärkt werden, so dass sich die Füllstoffe sowie eine die Füllstoffe enthaltende Putzschicht bei Sonneneinstrahlung nicht so stark aufheizen. Ist jedoch eine dunkle Farbgebung der Putzschicht bzw. eine Buntsteinputzschicht erwünscht, hilft ein helles Einfärben der Füllstoffe nicht weiter.

In der vorgeschlagenen Buntsteinputzmasse werden körnige und/oder sandige Füllstoffe eingesetzt, die mit NIR-reflektierenden Schwarzpigmenten beschichtet sind und einen HBW < 14 aufweisen. Eine aus der Buntsteinputzmasse ausgebildete Buntsteinputzschicht weist demnach eine dunkle Farbgebung auf. Darüber hinaus weisen die mit NIR-reflektierenden Schwarzpigmenten beschichteten körnigen und/oder sandigen Füllstoffe einen TSR-Wert > 10 auf. Das heißt, dass ein gewisser Anteil der Solarstrahlung, und zwar vorrangig elektromagnetische Strahlung in einem Wellenlängenbereich bis 3000 nm, reflektiert wird.

Doch nicht nur die Farbgebung einer Putzschicht entscheidet, wie viel Solarstrahlung bzw. Solarenergie absorbiert oder reflektiert wird. Es wurde festgestellt, dass auch der Wassergehalt einer Putzschicht Einfluss darauf hat. Wasser weist die Eigenschaft auf, IR-Strahlung zu absorbieren und in Wärme zu wandeln. Im NIR-Bereich zwischen 800 und 2000 nm weist Wasser vier starke Absorptionsbanden auf, so dass in diesem Bereich die Energieaufnahme von Wasser besonders stark ausgeprägt ist. Um eine zu starke Aufheizung einer Putzschicht zu verhindern, sollte daher der Wassergehalt so niedrig wie möglich sein. Dies gilt sowohl für freies Wasser als auch für Wasser in physiobierter Form.

Aus diesem Grund enthält die vorgeschlagene Buntsteinputzmasse mindestens ein Hydrophobierungsmittel. Dieses verringert die Wasseraufnahme einer aus der Buntsteinputzmasse ausgebildeten Buntsteinputzschicht, das heißt, dass weniger NIR-Strahlung absorbiert wird und sich die Buntsteinputzschicht weniger stark aufheizt.

In der vorgeschlagenen pastösen Buntsteinputzmasse tragen sowohl die mit NIR-reflektierenden Schwarzpigmenten beschichteten körnigen und/oder sandigen Füllstoffe als auch das mindestens eine Hydrophobierungsmittel jeweils ihren Teil dazu bei, dass die eingangs genannten Nachteile verhindert oder zumindest deutlich gemindert werden. Keiner der Bestandteile ist dabei verzichtbar. Es spricht demzufolge nichts dagegen, die vorgeschlagene pastöse Buntsteinputzmasse auch großflächig aufzubringen, beispielsweise zur Ausbildung einer außenliegenden Putzschicht in einem Wärmedämmverbundsystem.

Von den in der vorgeschlagenen Buntsteinputzmasse enthaltenen körnigen und/oder sandigen Füllstoffen können alle oder nur ein Teil mit NIR-reflektierenden Schwarzpigmenten beschichtet sein. Zur Ausbildung eines Buntsteinputzes kann es beispielsweise von Vorteil sein, wenn nur ein Teil der körnigen und/oder sandigen Füllstoffe eingefärbt ist, so dass körnige und/oder sandige Füllstoffe in zumindest zwei unterschiedlichen Farbgebungen vorliegen.

Um Mehrfarbigkeit zu erzielen, können auch körnige und/oder sandige Füllstoffe enthalten sein, die sich hinsichtlich ihrer natürlichen Farbgebung unterscheiden und/oder unterschiedlich eingefärbt sind. Beispielsweise kann die Beschichtung der körnigen und/oder sandigen Füllstoffe unterschiedliche NIR-reflektierende Schwarzpigmente enthalten.

Bevorzugt weisen zumindest ein Teil der in der vorgeschlagenen pastösen Buntsteinputzschicht enthaltenen körnigen und/oder sandigen Füllstoffe eine Beschichtung mit NIR-reflektierenden Schwarzpigmenten der C.I.-Pigmentklassen P.Br. 29 und P.G. 17 auf. Exemplarisch sind hier als geeignete Vertreter der C.I.-Pigmentklasse P.Br. 29 die Produkte Heucodur IR Black 869 ((Fe,Cr)O3), 910, 940 (Fe(Fe,Cr)2O4) und 945 der Heubach GmbH, die Produkte Black 411A und Black 10P950 der Firma Shepherd, die Produkte AL-41247 und AL-42247 der AL-FARBEN S.A. und das Produkt Sicopal Schwarz L 0095 der BASF SE genannt.

Ebenfalls geeignet sind Xfast^{®} Schwarz 0095 und Luconyl^{®} NG Schwarz 0095 der BASF SE. Ferner exemplarisch sind als geeignete Vertreter der C.I.-Pigmentklasse P.G. 17 die Produkte AL-81191 und AL-82191 der AL-FARBEN S.A., die Produkte 24-775 PK, 24-10204 PK, 24-10430, 24-10466 der Ferro Corporation und das Produkt Black 10C909A der Firma Shepherd genannt. Zumindest ein Teil der körnigen und/oder sandigen Füllstoffe kann auch eine Beschichtung mit NIR-reflektierenden Schwarzpigmenten der C.I.-Pigmentklasse P.Bk. 33, beispielsweise das Produkt Bayferrox 303T, und/oder der C.I.-Pigmentklasse P.Bk. 30 aufweisen, beispielsweise die Produkte Heucodur IR Black 950 der Heubach GmbH und Black 376A der Fa. Sheperd. Ganz bevorzugt werden die Schwarzpigmente Cool Color HS Black V-774 von Ferro und / oder Colanyl Oxidschwarz IR 531 von Clariant eingesetzt.

Die genannten Beispiele zeigen, dass NIR-reflektierende Schwarzpigmente bekannt und verfügbar sind. Sie gehen in der Regel zurück auf oder umfassen Eisen/Manganoxidpigmente, Chrom/Eisen/ Nickeloxidpigmente sowie insbesondere Chrom/Eisenoxidpigmente. Bei Eisen/Manganoxidpigmenten handelt es sich im Allgemeinen um Mischoxide aus Manganoxid und Eisenoxid. Chrom/Eisen/Nickeloxidpigmente liegen vorzugsweise in der Spinellstruktur vor und können über die Summenformel (Ni,Fe)(Cr,Fe)2O4 verfügen. Man erhält sie durch Calcinierung von Chrom(II)oxid, Eisen(II)oxid und Eisen(III)oxid. Gegebenenfalls können auch noch CuO, MnO und/oder Mn2O3 als Modifiziermittel hinzugegeben werden. Chrom/Eisenoxidpigmente basieren im Allgemeinen auf Mischungen aus Eisenoxiden und Chromoxiden, insbesondere Cr(III)-Oxiden und können u.a. durch die Formeln (Fe,Cr)2O3 und (Fe,Cr)O3 wiedergegeben werden.

Ferner bevorzugt enthält die Beschichtung der körnigen und/oder sandigen Füllstoffe ein auf Polyurethan basierendes Bindemittel. Auf Polyurethan basierende Bindemittel weisen den Vorteil auf, dass sie UV-stabiler und damit langlebiger als beispielsweise auf Epoxid basierende Bindemittel sind. Im Ergebnis kann so die Haftung der NIR-reflektierenden Schwarzpigmente auf den körnigen und/oder sandigen Füllstoffen verbessert werden. Das heißt, dass es weniger zu Abplatzungen und damit einhergehenden Farbveränderungen kommt.

Bevorzugt sind Carbonate und/oder Silikate, insbesondere Calcit, Marmor, Dolomit, Quarz und/oder Cristobalit, als körnige und/oder sandige Füllstoffe in der Buntsteinputzmasse enthalten. Diese Füllstoffe werden aufgrund ihrer preiswerten Verfügbarkeit traditionell als Körnungen und/oder Sande in Putzbeschichtungen eingesetzt.

Die mittlere Partikelgröße (D50 - Wert) der körnigen und/oder sandigen Füllstoffe beträgt vorzugsweise 0,3 - 3,0 mm, weiterhin vorzugsweise 0,4 - 2,5 mm. Die Bestimmung der D50 - Werte erfolgt bevorzugt nach DIN ISO 9276-1:2004-09 (Darstellung der Ergebnisse von Partikelgrößenanalysen - Teil 1) und ISO 9276-2:2014-05 (Darstellung der Ergebnisse von Partikelgrößenanalysen - Teil 2). Gemäß einer bevorzugten Ausführungsform liegen die Korngrößen der körnigen und/oder sandigen Füllstoffe im Bereich von 0,1 mm bis 4,0 mm, vorzugsweise im Bereich von 0,2 mm bis 3,0 mm, wobei die Korngrößen durch Siebanalyse nach DIN 66165-1:2016-08 ermittelt werden können.

Die mit einem NIR-reflektierenden Schwarzpigment beschichteten körnigen und/oder sandigen Füllstoffe werden nachfolgend als "NIR-Körnung" bezeichnet, um sie leichter von anderen, herkömmlichen Füllstoffen zu unterscheiden. Denn solche können ebenfalls in der vorgeschlagenen Buntsteinputzmasse enthalten sein. Besondere Eigenschaften der NIR-Körnung sind ein HBW unter 14 und ein TSR-Wert über 10.

Zur Herstellung der NIR-Körnung kann wie folgt vorgegangen werden:
Einarbeiten der ausgewählten NIR-reflektierenden Schwarzpigmente in eine Polyurethan-Bindemittelmatrix. Zugeben einer Härterkomponente, so dass ein Bindemittel-Pigment-Härter-Gemisch vorliegt. Der Gehalt an NIR-reflektierenden Schwarzpigmenten im Bindemittel-Pigment-Härter-Gemisch ist dabei durch den geforderten HBW und den geforderten TSR-Wert der herzustellenden NIR-Körnung vorgegeben. Vorlegen der zu beschichtenden körnigen und/oder sandigen Füllstoffe in einem Mischer und Zugeben des Bindemittel-Pigment-Härter-Gemischs unter ständigem Rühren/Umwälzen aller Komponenten im Mischer, bis das Bindemittel-Pigment-Härter-Gemisch auf den Füllstoffen getrocknet bzw. gehärtet ist. Die Trocknung/Härtung kann ggf. auch durch Zugabe von Wärme forciert werden. Das ständige Rühren/Umwälzen stellt die gleichmäßige Verteilung des Bindemittel-Pigment-Härter-Gemischs auf den Füllstoffen sicher.

Die Bestimmung des HBW und des TSR-Werts von körnigen und/oder sandigen Füllstoffen stellt eine Herausforderung dar, denn es besteht die Gefahr, dass Körner und/oder Sande in die Ulbricht-Kugel fallen. Zur Bestimmung der Werte kann daher alternativ wie folgt vorgegangen werden:
Die hergestellte NIR-Körnung wird mit einer geringen Menge eines Polymerbindemittels versetzt. Bevorzugt werden 95 Gew.-% der NIR-Körnung und 5 Gew.-% einer Polymerbindemitteldispersion (Feststoffgehalt 50%) jeweils bezogen auf das Gesamtgewicht der Ausgangsstoffe für die herzustellende Probe gemischt. Diese Masse kann dann in einer Schichtstärke von 5 mm auf eine Hartfaserplatte aufgezogen und geglättet werden. Nach dem Trocknen ist die Probe ausreichend stabil, um an der Ulbricht-Kugel vermessen zu werden. Versuche mit entsprechenden Proben haben ergeben, dass die geringe Menge an Polymerbindemittel keinen nennenswerten Einfluss auf den HBW und den TSR-Wert hat und somit vernachlässigt werden kann.

In entsprechender Weise ist die Anmelderin bei der Bestimmung des HBW und des TSR-Werts der NIR-Körnungen der weiter unten genannten Ausführungsbeispiele vorgegangen. Als Polymerbindemittel wurde jeweils ein Vinylacetat-Ethylen - Copolymer (z.B. Mowilith LDM 1871, Celanese) verwendet. Im Rahmen der Vermessung wurden jeweils mindestens drei Messungen durchgeführt und aus diesen der Mittelwert gebildet.

In einer erfindungsgemäßen Buntsteinputzmasse sind, bezogen auf das Gesamtgewicht der Ausgangsstoffe, vorzugsweise 10 - 90 Gew.-%, weiterhin vorzugsweise 20 - 80 Gew.-%, besonders bevorzugt 30 - 75 Gew.-% an körnigen und/oder sandigen Füllstoffen enthalten, die eine Beschichtung mit NIR-reflektierenden Schwarzpigmenten und einen
- Hellbezugswert (HBW) < 14, vorzugsweise < 10, weiterhin vorzugsweise < 8, und
- Total Solar Reflectance (TSR)-Wert > 10, vorzugsweise > 12, weiterhin vorzugsweise > 15,
aufweisen.

Ferner vorzugsweise sind, bezogen auf das Gesamtgewicht der Ausgangsstoffe, 0 - 80 Gew.-%, weiterhin vorzugsweise 10 - 70 Gew.-%, besonders bevorzugt 15 - 60 Gew.-% weitere körnige und/oder sandige Füllstoffe enthalten sein, die keine NIR-Körnung sind, das heißt keine Beschichtung mit einem NIR-reflektierenden Schwarzpigment aufweisen.

Neben der NIR-Körnung stellt das Hydrophobierungsmittel einen wesentlichen Bestandteil der vorgeschlagenen Buntsteinputzmasse dar. Vorzugsweise sind 0,05 - 1,0 Gew.-%, weiterhin vorzugsweise 0,05 - 0,8 Gew.-%, besonders bevorzugt 0,1 - 0,6 Gew.-% Hydrophobierungsmittel bezogen auf das Gesamtgewicht der Ausgangsstoffe enthalten.

Als Hydrophobierungsmittel können Polysiloxane in Form von Silikonharzen oder Silikonölen, Paraffine und Wachse sowie Fettsäuren oder Fettsäurederivate eingesetzt werden. Besonders bevorzugt werden lineare Silikonöle eingesetzt.

Silikonöle sind keine gebräuchlichen Hydrophobierungsmittel. Sie werden gelegentlich mit flüssigen Silikonharzen fälschlicherweise gleichgesetzt oder verwechselt. Silikonöle sind überwiegend linear und nur in seltenen Fällen cyclisch aufgebaut, und zwar ausschließlich aus mono- und difunktionalen Einheiten. Das heißt, dass sie keine tri- oder quartärfunktionalen Einheiten wie Silikonharze enthalten, so dass sie nicht über Si-O-Si-Brücken vernetzen können. Silikonöle sind, wie es die Bezeichnung "Öl" schon besagt, bei 20°C/1 bar flüssig bis zähflüssig.

Die Seitengruppen der erfindungsgemäß verwendeten Silikonöle sind weitgehend unpolarer Natur, beispielsweise Hydrocarbyl-Gruppen, können aber vereinzelt reaktive Gruppen, beispielsweise alkylierte Aminogruppen, tragen. Vorzugsweise enthält das Silikonöl hauptsächlich Hydrocarbylseitenketten, z.B. C₁ bis C₂₀ Hydrocarbylseitenketten, noch bevorzugter hauptsächlich Alkylseitenketten, z.B. C₁ bis C₂₀ Alkylseitenketten. Durch die Abwesenheit von polaren Seitenketten weist das Silikonöl stark unpolaren Charakter auf. Normalerweise enthalten die Alkylketten nicht mehr als 5 Kohlenstoffatome. Verzweigte und lineare Polysiloxane mit methyl-, ethyl- oder propyl-Seitenketten sind besonders bevorzugt.

Unter "hauptsächlich unpolare Seitenketten" wird vorliegend verstanden, dass bei der Synthese der Silikonöle keine polaren Seitenketten absichtlich eingeführt werden. Unter "hauptsächlich Hydrocarbylseitenketten" wird vorliegend verstanden, dass bei der Synthese der Silikonöle keine Seitenketten außer Hydrocarbylseitenketten absichtlich eingeführt werden. Unter "hauptsächlich Alkylseitenketten" wird vorliegend verstanden, dass bei der Synthese der Silikonöle keine Seitenketten außer Alkylseitenketten absichtlich eingeführt werden. Die Alkylseitenketten können ihrerseits aber vereinzelt reaktive Gruppen, beispielsweise alkylierte Aminogruppen, tragen. Diese reaktiven Gruppen sind aber nicht in der Lage, zu einer zwei- oder dreidimensionalen Vernetzung des Silikonöls zu führen; d.h. diese Gruppen sind reaktiv, aber nicht vernetzend.

Dies gilt analog für C₁ bis C₂₀ Hydrocarbylseitenketten und C₁ bis C₂₀ Alkylseitenketten.

In einer bevorzugten Ausführungsform enthält das Silikonöl ausschließlich Hydrocarbylseitenketten, noch bevorzugter ausschließlich Alkylseitenketten gemäß einer der vorstehend genannten Ausführungsformen.

Das Silikonöl weist vorzugsweise keine Alkoxyseitenketten auf. Die Abwesenheit von Alkoxyseitenketten kann durch Abwesenheit der symmetrischen Si-O-C-Streckschwingung im FTIR-Spektrum (940 bis 970 cm⁻¹) festgestellt werden.

Weiterhin vorzugsweise weist das Silikonöl ein Molekulargewicht von 1000 bis 20000 g/Mol auf, besonders bevorzugt sind 4000 bis 10000 g/Mol.

In der vorgeschlagenen Buntsteinputzmasse sind darüber hinaus weitere Additive enthalten. Als weitere Additive können beispielsweise rheologische Additive, Verdicker, Topf- und Filmkonservierungsmittel, Filmbindehilfsmittel, Biozide, Entschäumer, Fasern, Pigmente und/oder Lichtschutzmittel enthalten sein. Vorzugsweise sind 0,1 - 5 Gew.-%, weiterhin vorzugsweise 0,3 - 3 Gew.-%, besonders bevorzugt 0,5 - 2 Gew.-% weitere Additive bezogen auf das Gesamtgewicht der Ausgangsstoffe enthalten.

Auf die Zugabe von Netz- und Dispergiermitteln sollte verzichtet werden, da diese die Wasseraufnahme erhöhen und somit die Wirkung des gezielt eingesetzten Hydrophobierungsmittels ganz oder teilweise aufheben würden. Da das "Einschleppen" von Netz- und Dispergiermitteln über die Zugabe sonstiger Additive nicht gänzlich ausgeschlossen werden kann, wird als maximal zulässige Menge vorgeschlagen, dass in der Buntsteinputzmasse weniger als 0,1 Gew.-%, vorzugsweise weniger als 0,01 Gew.-% Netz- und Dispergiermittel bezogen auf das Gesamtgewicht der Ausgangsstoffe enthalten sind.

Ferner bevorzugt ist bzw. sind in der vorgeschlagenen Buntsteinputzmasse ein Polymerbindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate umfassend Homo- oder Copolymere von Acrylaten und/oder Methacrylaten, gegebenenfalls mit Acryl- und/oder Methacrylsäure als Comonomerbaustein, enthalten.

Besonders bevorzugt sind Copolymere aus Vinylacetat-Ethylen, Acrylsäureester-Acrylnitril, Acryl-/Methacrylsäureester, Styrol-Butylacrylat sowie Acrylat-Homopolymer als Polymerbindemittel enthalten.

Die vorgeschlagene Buntsteinputzmasse enthält vorzugsweise 4 - 25 Gew.-%, weiterhin vorzugsweise 5 - 20 Gew.-%, besonders bevorzugt 5 - 15 Gew.-% an Polymerbindemittel bezogen auf das Gesamtgewicht der Ausgangsstoffe.

Das Polymerbindemittel liegt zweckmäßigerweise in Form einer wässrigen Bindemittedispersion vor. Der Feststoffgehalt der wässrigen Bindemitteldispersion beträgt vorzugsweise 30 - 65 Gew.-%, weiterhin vorzugsweise 40 - 62 Gew.-% und besonders bevorzugt 45 - 62 Gew.-% bezogen auf das Gesamtgewicht der Dispersion.

Bevorzugt sind in der vorgeschlagenen Buntsteinputzmasse

| | |
|---|---|
| 4 - 25 Gew.-% | Polymerbindemittel |
| 10 - 90 Gew.-% | körnige und/oder sandige Füllstoffe, die mit einem NIR-reflektierenden Schwarzpigment beschichtet sind und einen HBW < 14 sowie einen TSR-Wert > 10 aufweisen ("NIR-Körnung") |
| 0 - 80 Gew.-% | weitere körnige und/oder sandige Füllstoffe |
| 0,05 - 1 Gew.-% | Hydrophobierungsmittel |
| 0,1 - 5 Gew.-% | weitere Additive |
| 5 - 20 Gew.-% | Wasser |

jeweils bezogen auf das Gesamtgewicht der Ausgangsstoffe enthalten.

Eine entsprechende Buntsteinputzmasse eignet sich zur Ausbildung einer Buntsteinputzschicht, die nicht nur auf kleinen Flächen lange haltbar ist, sondern auch bei großflächigem Auftrag lange ansehnlich bleibt. Grund hierfür sind die speziellen Farbpigmente, welche die eingefärbten Füllstoffe zu einer NIR-Körnung machen, sowie das enthaltene Hydrophobierungsmittel. Denn beides in Kombination hat den Effekt, dass die Absorption von Solarstrahlung gemindert und die Reflexion gesteigert wird, so dass ein starkes Aufheizen der Buntsteinputzschicht vermieden wird.

Es wird daher ferner eine ein- oder mehrlagige Buntsteinputzschicht beansprucht, die aus einer erfindungsgemäßen pastösen Buntsteinputzmasse ausgebildet worden ist.

Darüber hinaus wird die Verwendung einer erfindungsgemäßen pastösen Buntsteinputzmasse zur Ausbildung einer ein- oder mehrlagigen Buntsteinputzschicht vorgeschlagen, aufweisend
- einen HBW < 20, vorzugsweise < 15, weiterhin vorzugsweise < 12 und
- einen TSR-Wert > 10, vorzugsweise >12, weiterhin vorzugsweise > 15.

Zur Erläuterung der Vorteile der Erfindung werden nachfolgend zwei Ausführungsbeispiele einer erfindungsgemäßen pastösen Buntsteinputzmasse angegeben. Die dabei verwendete NIR-Körnung wies jeweils einen Hellbezugswert (HBW) von 3 und einen TSR-Wert von 18 auf. Zur Herstellung der NIR-Körnung wurde das weiter oben beschriebene Verfahren eingesetzt, wobei 50 Gew.-% NIR-reflektierende Schwarzpigmente sowie 50 Gew.-% eines auf Polyurethan basierenden Polymerbindemittels jeweils bezogen auf das Gesamtgewicht der Ausgangsstoffe der Farbpigment-Bindemittelmischung verwendet wurden. Zur Herstellung der Farbpigment-Bindemittelmischung wurden die NIR-reflektierenden Schwarzpigmente in das Polymerbindemittel eingearbeitet. Dann wurden 97 Gew.-% des zu beschichtenden körnigen und/oder sandigen Füllstoffs in einem Mischer vorgelegt und 3 Gew.-% der Farbpigment-Bindemittelmischung, jeweils bezogen auf das Gesamtgewicht der Ausgangsstoffe zur Herstellung der NIR-Körnung, unter ständigem Rühren/Umwälzen aller Komponenten im Mischer zugegeben. Nach dem Trocknen bzw. Härten der Farbpigment-Bindemittelmischung konnte die fertige NIR-Körnung dem Mischer entnommen werden.

### Ausführungsbeispiel 1

| | | |
|---|---|---|
| 17,0 | Gew.-% | Polymerbindemittel (Polymerdispersion, Feststoff ca. 50%) |
| 73,0 | Gew.-% | NIR-Körnung, 1,2 - 2,5 mm |
| 0,2 | Gew.-% | Hydrophobierungsmittel (Silikonöl) |
| 0,8 | Gew.-% | weitere Additive (Rheologieadditive, Entschäumer, Biozide, |
| | | Filmbildehilfsmittel, etc.) |
| 9,0 | Gew.-% | Wasser |
| 100 | Gew.-% | |

### Ausführungsbeispiel 2

| | | |
|---|---|---|
| 17,0 | Gew.-% | Polymerbindemittel (Polymerdispersion, Feststoff ca. 50%) |
| 43,0 | Gew.-% | NIR-Körnung, 1,2 - 2,5 mm |
| 30,0 | Gew.-% | weitere Füllstoffe (Körnung grau, 2 - 2,5 mm |
| 0,2 | Gew.-% | Hydrophobierungsmittel (Silikonöl) |
| 0,8 | Gew.-% | weitere Additive (Rheologieadditive, Entschäumer, Biozide, Filmbildehilfsmittel, etc.) |
| 9,0 | Gew.-% | Wasser |
| 100 | Gew.-% | |

Aus den angegebenen Rezepturen der beiden Ausführungsbeispiele wurde anschließend jeweils eine Buntsteinputzschicht ausgebildet. Die Buntsteinputzschicht aus der Buntsteinputzmasse des Ausführungsbeispiels 1 wies einen Hellbezugswert (HBW) von 3 und einen TSR-Wert von 19 auf. Die Buntsteinputzschicht aus der Buntsteinputzmasse des Ausführungsbeispiels 2 wies einen Hellbezugswert (HBW) von 7 und einen TSR-Wert von 16.

Beide Buntsteinputzschichten wurden der Freibewitterung in 45°Südauslegung, Wetterstand in Süddeutschland, über einen Zeitraum von zwei Jahren ausgesetzt. Beide Auslegungsmuster zeigten während der Freibewitterung keine nennenswerten Mängel oder negativen Auffälligkeiten hinsichtlich Weißanlaufens oder Farb- bzw. Helligkeitsveränderungen der Putzschicht.

Als Referenzbeispiele wurden zwei weitere Buntsteinputzmassen hergestellt, die auf den Rezepturen der Ausführungsbeispiele 1 und 2 basieren, jedoch ohne NIR-Körnung. Anstelle der NIR-Körnung wurde eine herkömmliche schwarz-gefärbte Körnung verwendet. Das heißt, dass keine NIR-reflektierenden Schwarzpigmente zum Färben der Körnung verwendet wurde, Im Übrigen entsprachen die Referenzbeispiele den Ausführungsbeispielen 1 und 2.

Aus den Buntsteinputzmassen der Referenzbeispiele wurden ebenfalls Buntsteinputzschichten hergestellt und die Werte HBW sowie TSR bestimmt. Die nachfolgende Tabelle zeigt das Ergebnis der Bestimmung in einer Gegenüberstellung mit den Werten der Ausführungsbeispiele 1 und 2.

| | Referenzb. 1 | Referenzb. 2 | Ausführungsb. 1 | Ausführungsb. 2 |
|---|---|---|---|---|
| HBW | 4 | 7 | 3 | 7 |
| TSR-Wert | 4 | 7 | 19 | 16 |

Die Gegenüberstellung verdeutlicht den Einfluss der NIR-Körnung auf den TSR-Wert einer erfindungsgemäßen Buntsteinputzschicht.

## Patentansprüche

1. Pastöse Buntsteinputzmasse zur Ausbildung einer ein- oder mehrlagigen Buntsteinputzschicht, enthaltend
- mindestens ein Polymerbindemittel,
- körnige und/oder sandige Füllstoffe,
- Hydrophobierungsmittel,
- weitere Additive und
- Wasser,
wobei zumindest ein Teil der körnigen und/oder sandigen Füllstoffe eine Beschichtung mit NIR-reflektierenden Schwarzpigmenten und einen
- Hellbezugswert (HBW) < 14, vorzugsweise < 10, weiterhin vorzugsweise < 8, und
- Total Solar Reflectance (TSR)-Wert > 10, vorzugsweise > 12, weiterhin vorzugsweise > 15,
aufwei st.

2. Buntsteinputzmasse nach Anspruch 1,
**dadurch gekennzeichnet, dass** zumindest ein Teil der körnigen und/oder sandigen Füllstoffe eine Beschichtung mit NIR-reflektierenden Schwarzpigmenten der C.I.-Pigmentklassen P.Br. 29, P.G. 17, P.Bk. 33 und/oder P.Bk. 30 aufweisen.

3. Buntsteinputzmasse nach Anspruch 1 oder 2,
**dadurch gekennzeichnet, dass** die Beschichtung der körnigen und/oder sandigen Füllstoffe ein auf Polyurethan basierendes Bindemittel enthält.

4. Buntsteinputzmasse nach einem der vorhergehenden Ansprüche,
**dadurch gekennzeichnet, dass** Carbonate und/oder Silikate, insbesondere Calcit, Marmor, Dolomit, Quarz und/oder Cristobalit, als körnige und/oder sandige Füllstoffe enthalten sind.

5. Buntsteinputzmasse nach einem der vorhergehenden Ansprüche,
**dadurch gekennzeichnet, dass** die mittlere Partikelgröße (D50) der körnigen und/oder sandigen Füllstoffe 0,3 - 3,0 mm, vorzugsweise 0,4 - 2,5 mm, beträgt und/oder die Korngrößen der körnigen und/oder sandigen Füllstoffe im Bereich von 0,1 mm bis 4,0 mm, vorzugsweise im Bereich von 0,2 mm bis 3,0 mm, liegen.

6. Buntsteinputzmasse nach einem der vorhergehenden Ansprüche,
**dadurch gekennzeichnet, dass** 10 - 90 Gew.-%, vorzugsweise 20 - 80 Gew.-%, weiterhin vorzugsweise 30 - 75 Gew.-% an körnigen und/oder sandigen Füllstoffen bezogen auf das Gesamtgewicht der Ausgangsstoffe enthalten sind, die eine Beschichtung mit NIR-reflektierenden Schwarzpigmenten und einen
- Hellbezugswert (HBW) < 14, vorzugsweise < 10, weiterhin vorzugsweise < 8, und
- Total Solar Reflectance (TSR)-Wert > 10, vorzugsweise > 12, weiterhin vorzugsweise > 15,
aufweisen.

7. Buntsteinputzmasse nach einem der vorhergehenden Ansprüche,
**dadurch gekennzeichnet, dass** 0 - 80 Gew.-%, vorzugsweise 10 - 70 Gew.-%, weiterhin vorzugsweise 15 - 60 Gew.-% weitere körnige und/oder sandige Füllstoffe bezogen auf das Gesamtgewicht der Ausgangsstoffe enthalten sind, die keine Beschichtung mit einem NIR-reflektierenden Schwarzpigment aufweisen.

8. Buntsteinputzmasse nach einem der vorhergehenden Ansprüche,
**dadurch gekennzeichnet, dass** 0,05 - 1,0 Gew.-%, vorzugsweise 0,05 - 0,8 Gew.-%, weiterhin vorzugsweise 0,1 - 0,6 Gew.-% Hydrophobierungsmittel bezogen auf das Gesamtgewicht der Ausgangsstoffe enthalten.

9. Buntsteinputzmasse nach einem der vorhergehenden Ansprüche,
**dadurch gekennzeichnet, dass** mindestens ein Hydrophobierungsmittel aus der Gruppe der Polysiloxane enthalten ist, vorzugsweise in Form eines Silikonharzes oder eines Silikonöls, insbesondere eines linearen Silikonöls.

10. Buntsteinputzmasse nach einem der vorhergehenden Ansprüche,
**dadurch gekennzeichnet, dass** rheologische Additive, Verdicker, Topf- und Filmkonservierungsmittel, Filmbindehilfsmittel, Biozide, Entschäumer, Fasern, Pigmente und/oder Lichtschutzmittel als weitere Additive enthalten sind.

11. Buntsteinputzmasse nach einem der vorhergehenden Ansprüche,
**dadurch gekennzeichnet, dass** in der Buntsteinputzmasse weniger als 0,1 Gew.-%, vorzugsweise weniger als 0,01 Gew.-% Netz- und Dispergiermittel bezogen auf das Gesamtgewicht der Ausgangsstoffe enthalten sind.

12. Buntsteinputzmasse nach einem der vorhergehenden Ansprüche,
**dadurch gekennzeichnet, dass** ein Polymerbindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate umfassend Homo- oder Copolymere von Acrylaten und/oder Methacrylaten, gegebenenfalls mit Acryl- und/oder Methacrylsäure als Comonomerbaustein, enthalten ist bzw. sind.

13. Buntsteinputzmasse nach einem der vorhergehenden Ansprüche,
**dadurch gekennzeichnet, dass**
| | |
|---|---|
| 4 - 25 Gew.-% | Polymerbindemittel |
| 10 - 90 Gew.-% | körnige und/oder sandige Füllstoffe, die mit einem NIR-reflektierenden Schwarzpigment beschichtet sind und einen HBW < 14 sowie einen TSR-Wert > 10 aufweisen |
| 0 - 80 Gew.-% | weitere körnige und/oder sandige Füllstoffe |
| 0,05 - 1 Gew.-% | Hydrophobierungsmittel |
| 0,1 - 5 Gew.-% | weitere Additive |
| 5 - 20 Gew.-% | Wasser |
jeweils bezogen auf das Gesamtgewicht der Ausgangsstoffe enthalten sind.

14. Ein- oder mehrlagige Buntsteinputzschicht, die aus einer pastösen Buntsteinputzmasse nach einem der vorhergehenden Ansprüche ausgebildet worden ist.

15. Verwendung einer pastösen Buntsteinputzmasse nach einem der Ansprüche 1 bis 10 zur Ausbildung einer ein- oder mehrlagigen Buntsteinputzschicht, aufweisend
- einen HBW < 20, vorzugsweise < 15, weiterhin vorzugsweise < 12 und
- einen TSR-Wert > 10, vorzugsweise >12, weiterhin vorzugsweise > 15.
